# EUROPÄISCHE PATENTSCHRIFT

(11) **EP 0 667 540 B1**
(45) Veröffentlichungstag und Bekanntmachung des Hinweises auf die Patenterteilung: **15.01.1997**
(21) Anmeldenummer: 94101950.7
(22) Anmeldetag: 09.02.1994
(51) Int. Cl.: G01T 1/29

(54) **Auslesevorrichtung für photostimulierbare Informationsträger**
Read-out apparatus for a stimulable phosphor sheet
Dispositif pour la reproduction d'image dans un écran luminescent stimulable

(43) Veröffentlichungstag der Anmeldung: 16.08.1995
(73) Patentinhaber: STOE & CIE GmbH, D-64295 Darmstadt (DE)
(72) Erfinder: Wölfel, Erich R., Prof. Dr., D-64287 Darmstadt (DE); Hiller, Klaus, Dr. Ing., D-64354 Reinheim (DE)
(74) Vertreter: Olbricht, Karl Heinrich, Dipl.-Phys.

(56) Entgegenhaltungen:
- EP-A- 0 209 119
- EP-A- 0 210 505
- US-A- 4 485 302
- US-A- 4 743 759

## Beschreibung

Die vorliegende Erfindung betrifft eine Vorrichtung zum zeilenweisen Abtasten photostimulierbarer Informationsträger gemäß dem Oberbegriff von Anspruch 1.

Bestrahlt man photostimulierbare Informationsträger wie z.B. Leuchtstoffplatten oder Speicherfolien mit Röntgenstrahlung, so entsteht auf dem Informationsträger ein über Stunden haltbares latentes Bild der Energieverteilung der auftreffenden Röntgenstrahlung. Dieses Bild kann durch Abtasten des Informationsträgers mit einem fein kollimierten Laserstrahl ausgelesen werden, der den Informationsträger stimuliert. Proportional zur gespeicherten Strahlungsenergie entsteht diffuses blaues Lumineszenzlicht, das mit einer Auslesevorrichtung gesammelt und in ein elektrisches oder digitales Signal umgewandelt wird.

Für die Qualität der digitalisierten Bilder ist es wichtig, die blaue Lumineszenzstrahlung möglichst vollständig zu erfassen, was herkömmlich nur unzureichend gelang. So beschreibt EP 0 421 632 A2 eine Vorrichtung zur digitalen Verarbeitung von Röntgenbildern, bei der das blaue Lumineszenzlicht von einer Anordnung optischer Lichtleiter gesammelt und einem Photomultiplier zugeleitet wird. Die Lichtleiter sind dabei einzeln nebeneinander über die gesamte Breite einer photostimulierbaren Phosphor-Platte angeordnet und am Lichtleiterausgang, entsprechend dem Querschnitt des Photosensors, zylinderförmig zusammengefaßt. Der Abstand zwischen der zu lesenden Zeile und den Stirnflächen der Lichtleiter muß sehr klein gehalten werden, um einen möglichst großen Anteil der in den gesamten Raumwinkel emittierten blauen Lumineszenzstrahlung zu erfassen. Da allerdings mit dieser Lichtleiteranordnung nur ein kleiner Bereich des Raumwinkels abgedeckt wird, geht der größte Teil der blauen Lumineszenzstrahlung ungenutzt verloren. Ähnliche Anordnungen mit Lichtleitern sind z.B. in EP 0 183 063 B1 und in EP 0 144 856 B1 beschrieben.

In DE 29 51 501 C3 ist eine Strahlungsbildlesevorrichtung offenbart, die zur Übertragung des von einer stimulierbaren Leuchtstoffplatte emittierten Lumineszenzlichts zu einem Photomultiplier lichtleitendes Flächenmaterial verwendet. Dessen Lichteinfallsfläche nahe einer Abtastzeile der stimulierbaren Leuchtstoffplatte hat eine im wesentlichen lineare Form. Das andere Ende des Lichtleiters weist eine angepaßte Ringform auf und wird nahe dem Photosensor angeordnet. Bei großer Dicke des Lichtleiters ist auch der abgedeckte Raumwinkel über der Abtastzeile groß. Die dem dem Photosensor zugewandte Querschnittsfläche am Austrittsende wird allerdings größer als die Lichteinfallsfläche, d.h. ein Teil des Lumineszenzlichts wird, obwohl vom Lichtleiter erfaßt, nicht genutzt. Abhilfe wird versucht, indem man zwei Lichtleiter mit gegenüberliegenden Lichteinfallsflächen und gegenüber dem linearen Eintrittsende eines Lichtleiters einen länglich-schmalen Reflektor oder Spiegel anordnet. Trotz des erhöhten mechanischen Aufwands ist es nicht möglich, den gesamten Raumwinkel abzudecken; das Lumineszenlicht divergiert in alle Raumrichtungen, insbesondere auch in Richtung der Abtastzeile. Nachteilig ist ferner, daß die Befestigung des Reflektors mittels Stellschrauben einen zusätzlichen Aufwand darstellt und für optimalen Lichteinfall justiert werden muß. Bei den gegenüberliegenden Lichtleitern ist ein größerer schaltungstechnischer Aufwand erforderlich, da zwei separate Photosensoren notwendig sind. Die Fertigung des Lichtleiters aus einem lichtleitenden Flächenmaterial ist sehr aufwendig und teuer. Zu starke Krümmungen oder Materialfehler stören die Totalreflexion oder führen zu einer Lichtabsorption, so daß bei der Lichtübertragung Intensitäts-Verluste nicht zu vermeiden sind. Eine ähnliche Vorrichtung ist in EP 0 169 965 B1 beschrieben.

Eine aus EP 0 224 248 B1 hervorgehende Vorrichtung zum Auslesen von Strahlungsbildern hat in unmittelbarer Nähe zu der zu lesenden Zeile einen langen Photomultiplier. Dieser erstreckt sich über die gesamte Breite der zu lesenden Zeile, so daß das emittierte blaue Lumineszenzlicht direkt auf dessen Lichteinfallsfläche fällt. Ein Nachteil dieser Anordnung besteht darin, daß der Raumwinkel, in den das Lumineszenzlicht emittiert wird, wiederum nur zu einem Teil abgedeckt wird. Auch die Anordnung eines Reflektors gegenüber dem Photomultiplier könnte den Wirkungsgrad nur unzureichend erhöhen.

In EP 0 209 119 A2 werden verschiedene Anordnungen von Auslesevorrichtungen angegeben, die aus einer Kombination von langen, längs der auszulesenden Zeile angeordneten Photomultipliern, kurzen Lichtleitern und optischen Filtern bestehen, die kompakter und in der Herstellung billiger sind als die oben besprochenen Anordnungen mit ausgedehnten Lichtleitern, die aber das blaue Lumineszenzlicht nur innerhalb begrenzter Raumwinkel erfassen. Der Photomultiplier mit seiner begrenzten Einfallsfläche und dem vorgesetzten Filter müßte extrem dicht über der Abtastzeile positioniert werden, was aber wegen seiner großen Abmessungen äußerst schwierig und technisch aufwendig ist, zumal der Laserstrahl möglichst senkrecht auf der Bildplatte auftreffen sollte. Der Nutzen von Spiegeln ist fragwürdig, da das von der Abtastzeile emittierte Licht nicht in den Photomultiplier reflektiert, sondern überwiegend auf die Bildplatte zurückgeworfen wird, was zwangsläufig unerwünschte Stimulationen auslöst.

Bei einer in EP-A-0 210 505 dargestellten Auslesevorrichtung für photostimulierbare Bildplatten wird das durch den Abtaststrahl induzierte Lumineszenzlicht von einem Spiegel mit elliptischem Querschnitt in einen Lichtleiter reflektiert, wobei der Spiegel mit seiner konkaven Seite der Bildplatte zugewandt ist. Die Lichteinfallsfläche des Lichtleiters und der Spiegel erstrecken sich parallel über die gesamte Breite der Bildplatte. Oberhalb der Abtastzeile hat der Spiegel einen Schlitz, damit der Abtaststrahl auf die Bildplatte auftreffen kann. Der Lichtleiterausgang ist auf die runde Einfallsfläche eines Photomultipliers verjüngt. Ein erheblicher Teil des in den gesamten Raumwinkel emittierten Lumineszenzlichts wird durch den halbseitig angeordneten Spiegel nicht erfaßt, was zu entsprechenden Einbußen in der Bildqualität führt. Zwar befinden sich die lichtemittierende Abtastzeile und die Lichteinfallsfläche des Lichtleiters in den Brennlinien des Halbspiegels, das zur offenen Seite des Spiegels hin emittierte Licht geht jedoch verloren, sofern es nicht direkt in den Lichtleiter gelangt. Licht, welches den Lichtleiter bereits erreicht hat, kann nachträglich wieder austreten, weil die emittierte Strahlung durch die Spiegelanordnung in den unterschiedlichsten Winkeln in den Lichtleiter eintritt. Weitere Intensitätsverluste entstehen durch zwangsläufig stattfindende Mehrfachreflexionen innerhalb des Lichtleiters und die Verengung der Lichtleiterfläche auf die Einfallsfläche des Photomultipliers.

US-A-4743759 zeigt eine Spiegelanordnung in Form einer Hohlkammer mit einem zur Mitte hin verjüngten rechteckigen Querschnitt. Sie erstreckt sich über die gesamte Breite der Bildplatte und besteht aus drei dachförmigen Spiegeln, deren ebene Spiegelflächen in einem Winkel von 90° zueinander stehen. Ein unterer Spiegel hat entlang seiner nach unten gerichteten Spitzkante einen Leseschlitz, der parallel zur Bildplattenoberfläche verläuft und möglichst dicht über der jeweils abzutastenden Bildzeile angeordnet ist. Die Spitzkanten der zwei oberen Spiegel sind nach oben gerichtet; ein V-förmiger Schlitz bildet den Einlaß für den Abtaststrahl. Zur Erfassung des emittierten blauen Lumineszenzlichts sind an den seitlichen Enden des Hohlkammerspiegels zwei seitlich weit herausragende Photomultiplier mit runden Einfallsflächen und vorgesetzten Filtern angeordnet. In diese gelangt ein Großteil der Abtaststrahlung nur über Mehrfachreflexionen, also mit entsprechenden Intensitätsverlusten. Weil nur ein Teil der rechteckigen Austrittsöffnung des Hohlkammerspiegels abgedeckt wird, geht ein weiterer Teil des von der Bildplatte emittierten Lichts verloren. Der Abstand der Spiegelflächen zur Bildplatte ändert sich entlang der Abtastzeile, so daß während des Auslesevorgangs, insbesondere in der Plattenmitte, erhebliche Intensitätsschwankungen entstehen, die durch eine Blendenanordnung aus lichtabsorbierendem Material aufwendig ausgeglichen werden müssen.

Der Erfindung liegt die Aufgabe zugrunde, unter Überwindung der Nachteile des Standes der Technik eine Auslesevorrichtung für photostimulierbare Informationsträger zu entwickeln, die von einer stimulierten Leuchtstoffplatte emittiertes Licht mit einfachen Mitteln möglichst vollständig erfaßt. Die Vorrichtung soll ferner billig herzustellen, einfach zu montieren und bequem zu handhaben sein.

Die Erfindung ist durch die im Anspruch 1 angegebenen Merkmale charakterisiert. Weitere Merkmale und Ausgestaltungen sind Gegenstand der Ansprüche 2 bis 10.

Eine Vorrichtung zum zeilenweisen Abtasten photostimulierbarer Informationsträger, insbesondere Speicherfolien, Leuchtstoffplatten o.dgl., durch einen Laserstrahl, der mittels einer Linsenanordnung fokussierbar und durch Umlenkspiegel über eine zu lesende Zeile auf dem Informationsträger bewegbar ist, mit einer auf die zu lesende Zeile fokussierenden, flächig gekrümmten Spiegelanordnung, die vom Informationsträger emittiertes Licht reflektiert, und mit einem Photomultiplier, der das von der Spiegelanordnung reflektierte Licht erfaßt, zeichnet sich nach der Erfindung dadurch aus, daß die Spiegelanordnung Bestandteil eines Abtastkörpers mit einem bodenseitig angeordneten Leseschlitz ist, wobei der Abtastkörper zwei einander symmetrisch gegenüberliegende, in Zeilenrichtung angeordnete paraboloidförmige Hauptspiegelflächen aufweist, die zu den Enden des Leseschlitzes hin von zwei paraboloidförmigen Endspiegelflächen abgeschlossen sind und wobei die Hauptspiegelflächen so angeordnet sind, daß durch sie von der zu lesenden Zeile emittiertes Licht in senkrechter Richtung weg vom Informationsträger auf einen Umlenkspiegel geleitet wird, der teildurchlässig oder geteilt ausgebildet ist, dem Abtastkörper gegenübersteht und von den Spiegelflächen, reflektierte Zeilenstrahlung auf den Photomultiplier umlenkt.

Diese Anordnung ist einfach aufgebaut. Aufgrund der direkten Licht-Übertragung in den Photomultiplier werden keine teuren Lichtleiter oder sonstigen Übertragungsmedien benötigt. Das in beliebige Raumrichtungen emittierte Licht wird nahezu vollständig erfaßt, denn die abzutastende Zeile liegt innerhalb des bodenseitigen Leseschlitzes des Abtastkörpers und damit in der Brennlinie der den Leseschlitz umgebenden paraboloidförmigen Haupt- und Endspiegelflächen. Sämtliche von der zu lesenden Zeile in den Raumwinkel emittierten Lichtstrahlen werden daher von dem Abtastkörper erfaßt und über die Spiegelflächen parallel nach oben gelenkt. Der oberhalb des Abtastkörpers angeordnete Umlenkspiegel leitet das Licht unmittelbar in den Photomultiplier, so daß praktisch keinerlei Streuverluste auftreten, da selbst in Zeilenrichtung emittiertes Licht von den Endspiegelflächen vollständig erfaßt und parallel nach oben auf den Umlenkspiegel geleitet wird. Insgesamt wird jeder Lichtstrahl nur zweimal reflektiert, was eine außerordentlich hohe Intensitätsausbeute zur Folge hat. Indem auch das von der Abtastzeile ausgehende Streulicht durch die parabelförmigen Spiegelflächen von der Bildplatte weggeführt wird, vermeidet man nicht nur Intensitäts-Schwankungen, sondern auch das Auftreten von Reflexionen des Laserstrahls und des Lumineszenzlichts auf die Bildplatte. Unerwünschte Stimulationen ("predischarge" bzw. "prestimulation") können somit gar nicht erst entstehen.

Gemäß Anspruch 2 wird ein Informationsträger zeilenweise ausgelesen, indem das von einer zu lesenden Zeile emittierte Licht durch einen Leseschlitz in die Spiegelanordnung gelangt und der quer zur Zeilenrichtung bewegte Abtastkörper eine glatte ebene Bodenfläche hat, die in besonders kleinem Abstand über dem darunter gleitenden Informationsträger steht. Durch die ebenso einfache wie genaue Positionierung der Spiegelanordnung zu letzterem ist gewährleistet, daß die Spiegel-Brennlinie immer exakt in der zu lesenden Zeile liegt. Selbst unter sehr flachem Winkel emittierte Lichtstrahlen werden noch erfaßt.

Die Spiegelanordnung kann nach Anspruch 3 mit ihrem Haupt- und Endspiegelflächen eine Spiegelwanne bilden. Diese ist mit einfachen Mitteln präzise herstellbar und hat im Einklang mit Anspruch 4 kontinuierliche, insbesondere paraboloidförmige Spiegelflächen, in deren Brennlinie sich die zu lesende Zeile befindet. Auf diese Weise werden durch den Leseschlitz einfallende Lichtstrahlen in die gleiche Richtung gelenkt. Mit einem einfachen Umlenkspiegel kann man die gesamte Zeilenstrahlung in den Photomultiplier leiten.

Damit das Laserlicht auf die zu lesende Zeile auftreffen kann, besitzt der oberhalb der Spiegelwanne angeordnete Umlenkspiegel nach Anspruch 5 einen schmalen Durchlaßspalt. Dieser ist so dimensioniert, daß keine Streu- oder Beugungs-Effekte vorkommen. Lumineszenzlichtverluste, die lediglich an dieser Stelle auftreten, sind entsprechend gering.

Anspruch 6 sieht vor, daß der Photomultiplier, der Umlenkspiegel und der Leseschlitz der Breite der zu lesenden Zeile angepaßt sind, was sich vorteilhaft auf die Empfindlichkeit und damit auf das Auflösungsvermögen auswirkt. Mit einem vor dem Photomultiplier angeordneten optischen Filter läßt sich das Eindringen von Laserstreulicht in die Auswerteeinheit verhindern.

Je nach gewünschter Auslesegeschwindigkeit und Bildqualität kann der Laserstrahl mittels einer Linsenanordnung auf verschiedene Pixelgrößen fokussiert werden. Dazu sind laut Anspruch 7 zwei Umlenkspiegel und eine Galvanometerscanner vorhanden, wodurch eine exakte und zuverlässige Ablenkung bzw. Steuerung des Laserstrahls gewährleistet ist.

Die Ausgestaltungen gemäß den Ansprüchen 8 bis 10 gewährleisten eine einfache und bequeme Handhabung der Auslesevorrichtung. So wird nach Anspruch 8 der Informationsträger durch einen abnehmbaren Lichtschutzdeckel vor Licht geschützt. Die auf dem Kassettenboden befestigte Leuchtstoffplatte besitzt eine exakt plane Oberfläche, was das präzise Auslesen der gespeicherten Informationen ermöglicht. Anspruch 9 sieht Mittel vor, um nicht mehr benötigte Informationen zu löschen. Der Informationsträger kann danach beliebig oft verwendet werden.

Eine vollautomatische Steuerung des gesamten Auslesevorganges, d.h. Abnehmen der Lichtschutzplatte, Auslesen der Informationen, Löschen von Restinformationen sowie Aufsetzen der Lichtschutzplatte, ist in Anspruch 10 angegeben. Eine Berührung der empfindlichen Leuchtstoffplatte ist daher ausgeschlossen. Die sichere Handhabung ist auch für nicht fachkundige Anwender denkbar einfach und bereitet keine besonderen Probleme.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Draufsicht einer Auslese-Vorrichtung,
- Fig. 2: eine Teil-Schnittansicht entlang der Linie X:X in Fig. 1,
- Fig. 3: eine schematische Draufsicht einer Spiegelwanne und
- Fig. 4 eine Teil-Schnittansicht entlang der Linie Y:Y in Fig. 1.

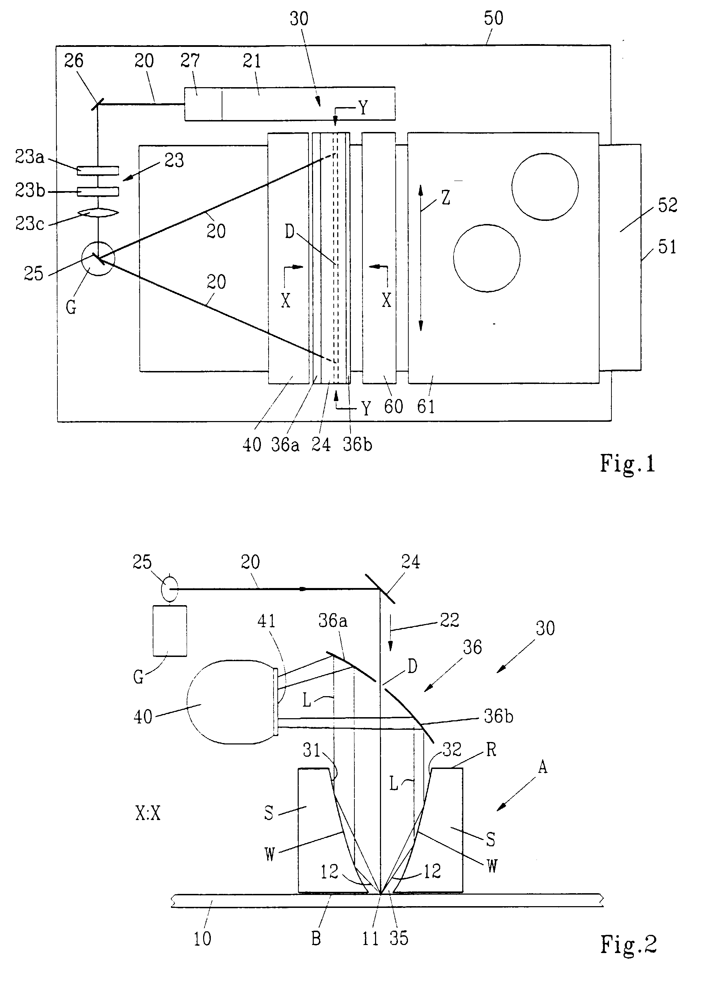

Die in Fig. 1 dargestellte Vorrichtung zum zeilenweisen Abtasten photostimulierbarer Informationsträger 10 besitzt eine zentral in einem Gehäuse 50 untergebrachte Auslesevorrichtung. Diese besteht im wesentlichen aus einer Spiegelanordnung 30 und einem Photomultiplier 40. Die zuvor belichtete und auszuwertende Leuchtstoffplatte 10 wird in einer (nicht dargestellten) Transport-Vorrichtung unterhalb der Auslesevorrichtung zeilenweise transportiert.

Die für den Auslesevorgang benötigte Laserstrahlung 20 wird z.B. von einem Helium-Neon-Laser 21 erzeugt und gelangt über einen Strahlaufweiter 27, einen Umlenkspiegel 26, eine Linsenanordnung 23 sowie einen Galvanometerspiegel 25 auf einen direkt über der Spiegelanordnung 30 angebrachten Umlenkspiegel 24 und anschließend auf den photostimulierbaren Informationsträger 10. Mit einem Shutter 23a kann der Laserstrahl jederzeit kurzfristig unterbrochen werden, ohne daß der Laser selbst abgeschaltet werden muß. Ein Blaufilter 23b verhindert ein Verfälschen der Meßergebnisse durch Fremdlicht.

Mit einer verschiebbar angeordneten Linse 23c wird der Laserstrahl 21 auf den Träger 10 fokussiert, wobei die Pixelgröße in einem vorgegeben Bereich eingestellt werden kann. Dieser Bereich beträgt z.B. zwischen 100 µm und 200 µm. Auf diese Weise kann man die Auslese-Geschwindigkeit und die Bild-Auflösung nach Bedarf beeinflussen.

Der Informationsträger, eine Leuchtstoffplatte 10, ist auf dem ebenen Kassettenboden 51 befestigt, namentlich sorgfältig eingeklebt. Auf diese Weise wird sichergestellt, daß die Oberfläche der Leuchtstoffplatte 10 exakt eben ist und bleibt. Zum lichtdichten Verschließen dient ein mit Kohlefaser bespannter Lichtschutzdeckel 52. Die Kassette 51 kann verschiedene Formate haben. Sie wird bevorzugt auf einem Schlitten in eine (nicht gezeichnete) Halterung, z.B. mit Schwalbenschwanzführung, durch eine (ebenfalls nicht dargestellte) Öffnung in das Gehäuse 50 der Auslese-Vorrichtung eingesteckt und beispielsweise mittels eines Druckstücks in einer Ausgangsstellung verrastet. Nach dem Auslösen des Auslese-Vorgangs, z.B. durch Betätigung eines (nicht dargestellten) Schalters, wird die Kassette 51 von der Transport-Einrichtung zu einer motorgetriebenen Abhebevorrichtung 61 transportiert, welche den Lichtschutzdeckel 52 von der Kassette 51 abnimmt. Die nun offenliegende Leuchtstoffplatte 10 wird zeilenweise unter der Auslesevorrichtung entlangbewegt und ausgelesen. Eine Elektronik steuert dabei die Bewegungen des Galvanometerspiegels 25 in Korrelation mit der linearen Zeilen-Bewegung der Leuchtstoffplatte 10.

Nach erfolgter Auslesung wird die Kassette 51 mit der Leuchtstoffplatte 10 zu einer Löschvorrichtung 60 transportiert. Dort werden, z.B. von starken Halogenlampen, die noch auf der Leuchtstoffplatte 10 verbliebenen Restinformationen gelöscht. Anschließend wird in der Abhebevorrichtung 61 der Lichtschutzdeckel 52 wieder auf die Kassette 51 aufgesetzt und diese in die Ausgangsstellung gebracht.

Fig. 2 zeigt eine Teil-Schnittansicht der erfindungsgemäßen Auslesevorrichtung senkrecht zur Zeilenrichtung Z. Das Laserlicht 20 gelangt über den Spiegel 25 eines Galvanometerscanners G und den Umlenkspiegel 24 auf die Leuchtstoffplatte 10; es trifft sie in einer zu lesenden Zeile 11. Von dieser wird blaues Lumineszenzlicht 12 nach allen Seiten emittiert und über die auf die Zeile 11 fokussierte Spiegelanordnung 30, bestehend aus einer Spiegelwanne S und einem Umlenkspiegel 36, in den Photomultiplier 40 reflektiert.

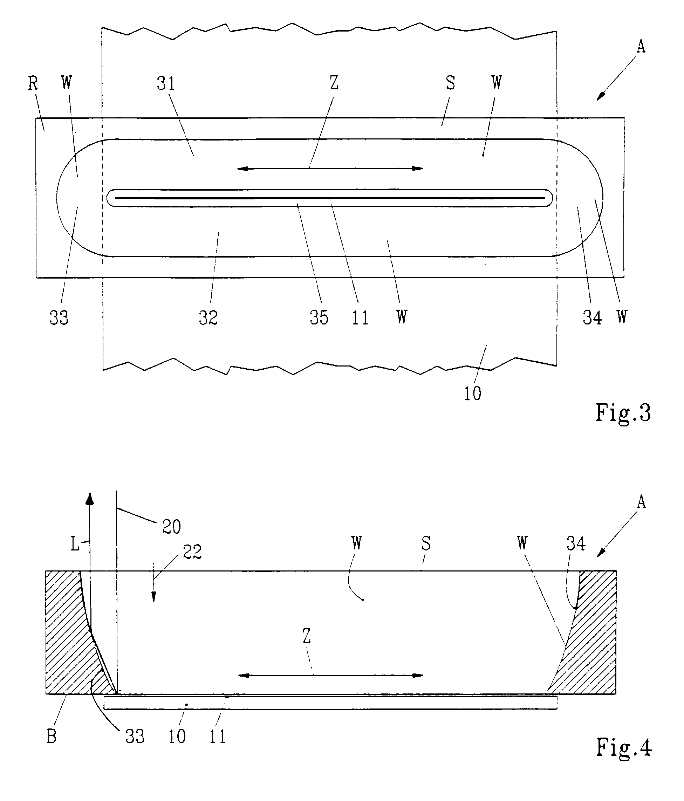

Die Spiegelwanne S hat an ihrer Bodenfläche B einen Leseschlitz 35 und daran unmittelbar anschließende, ihn umgebende und zur Einfallsrichtung 21 des Laserstrahls 20 offene Wandungen W (Fig. 3, Fig. 4). Diese werden von kontinuierlichen paraboloidförmigen Spiegelflächen 31, 32, 33, 34 gebildet, deren Brennpunkt in der zu lesenden Zeile 11 liegt. Wird die Spiegelwanne 5 mit dem Leseschlitz 35 exakt über einer Zeile 11 positioniert, so gelangen sämtliche von ihr ausgehenden Lichtstrahlen 12, d.h. auch die in Zeilenrichtung Z emittierten, über den Umlenkspiegel 36 in den Photomultiplier 40.

Damit der Laserstrahl ungehindert auf die Leuchtstoffplatte trifft, besitzt der Umlenkspiegel 36 vorzugsweise einen Durchlaßschlitz D. Dieser ist so dimensioniert, daß keine Streu- oder Beugungserscheinungen des Laserlichts 20 auftreten, gleichzeitig aber die Verluste der blauen Lumineszenzstrahlung gering bleiben. Um die Lichteinfallsfläche des Photomultipliers 40 möglichst klein zu halten, ist der Umlenkspiegel 36 vorzugsweise leicht gekrümmt ausgebildet. Ebenso kann der Abstand zwischen dem Photomultiplier 40 und der Spiegelwanne S klein gehalten werden. Ein dem Photomultiplier 40 vorgeordnetes Filter 41 verhindert, daß Laserlicht zusammen mit dem Lumineszenzlicht eindringt und die Meßergebnisse beeinflußt.

Die Erfindung ist nicht auf die vorbeschriebenen Ausführungsbeispiele beschränkt; vielmehr sind zahlreiche Varianten möglich. So können die Spiegelflächen 31 bis 34 in der Spiegelwanne S auch geteilt ausgebildet sein. Auch kann der Umlenkspiegel 36 mit in den Abtastkörper integriert werden. Die Laser-Anordnung läßt sich derart abwandeln, daß der Laserstrahl 20 direkt auf den Galvanometerspiegel 25 trifft. Man kann ferner die Anordnung der einzelnen Komponenten in dem Gehäuse 50 in beliebiger Reihenfolge verändern.

Man erkennt jedoch, daß eine erfindungsgemäße Vorrichtung zum zeilenweisen Abtasten photostimulierbarer Informationsträger 10 mittels eines fokussierten Laserstrahls 20 bevorzugt eine Spiegelanordnung 30 aufweist, die von einer zu lesenden Zeile 11 des Informationsträgers 10 emittiertes Licht 12 rundum erfaßt und direkt in einen Photomultiplier 40 reflektiert. Die Spiegelanordnung 30 ist auf die zu lesende Zeile 11 fokussiert und Bestandteil eines Abtastkörpers A mit einem bodenseitig angeordneten Leseschlitz 35, unter welchem der Informationsträger 10 schrittweise gleitend entlangbewegbar ist. Ferner besitzt die Spiegelanordnung 30 zwei Hauptspiegelflächen 31, 32 und zwei Endspiegelflächen 33, 34, welche bevorzugt eine an den Leseschlitz 35 unmittelbar anschließende, ihn umgebende Spiegelwanne S mit zur Einfallsrichtung 22 des Laserstrahls 20 offenen paraboloidförmigen Spiegelflächen 31 bis 34 bildet, in deren Brennlinie sich die zu lesende Zeile 11 befindet. Den Rändern R der offenen Wandungen W der Spiegelwanne S steht ein Umlenkspiegel 36 gegenüber, der von den Spiegelflächen 31 bis 34 reflektierte Zeilenstrahlung L auf den Photomultiplier 40 umlenkt. Der Laserstrahl 20 ist fokussierbar und über Umlenkspiegel 24, 25, 26 durch einen Durchlaßschlitz D hindurch über die zu lesende Zeile 11 bewegbar. Der Informationsträger 10 ist zur vollautomatischen Bild-Auswertung an einem zeilenweise weiterbewegbaren Kassettenboden 51 befestigt und durch einen abnehmbaren Lichtschutzdeckel 52 vor Licht geschützt. Nach dem Auslesen auf dem Informationsträger 10 noch verbliebene Restinformationen können mit einer Löschvorrichtung 60 vollständig gelöscht werden.

## Patentansprüche

1. Vorrichtung zum zeilenweisen Abtasten photostimulierbarer Informationsträger (10), insbesondere Speicherfolien, Leuchtstoffplatten o.dgl., durch einen Laserstrahl (20), der mittels einer Linsenanordnung (23) fokussierbar und durch Umlenkspiegel (24,25,26) über eine zu lesende Zeile (11) auf dem Informationsträger (10) bewegbar ist, mit einer auf die zu lesende Zeile (11) fokussierenden, flächig gekrümmten Spiegelanordnung (30), die vom Informationsträger (10) emittiertes Licht (12) reflektiert, und mit einem Photomultiplier (40), der das von der Spiegelanordnung (30) reflektierte Licht erfaßt, dadurch **gekennzeichnet,** daß die Spiegelanordnung (30) Bestandteil eines Abtastkörpers (A) mit einem bodenseitig angeordneten Leseschlitz (35) ist, wobei der Abtastkörper (A) zwei einander symmetrisch gegenüberliegende, in Zeilenrichtung (Z) angeordnete paraboloidförmige Hauptspiegelflächen (31, 32) aufweist, die zu den Enden des Leseschlitzes (35) hin von zwei paraboloidförmigen Endspiegelflächen (33, 34) abgeschlossen sind, und wobei die Hauptspiegelflächen (31, 32) so angeordnet sind, daß durch sie von der zu lesenden Zeile (11) emittiertes Licht in senkrechter Richtung weg vom Informationsträger (10) auf einen Umlenkspiegel (36) geleitet wird, der teildurchlässig oder geteilt ausgebildet ist, dem Abtastkörper (A) gegenübersteht und von den Spiegelflächen (31, 32, 33, 34) reflektierte Zeilenstrahlung (L, 12) auf den Photomultiplier (40) umlenkt.

2. Vorrichtung nach Anspruch 1, dadurch **gekennzeichnet,** daß zwischen dem Abtastkörper (A) und dem Informationsträger (10) eine Relativbewegung quer zur Zeilenrichtung (Z) ausführbar ist, wobei der Abtastkörper (A) eine glatte, vorzugsweise ebene Bodenfläche (B) aufweist, unter welcher der Informationsträger (10) in sehr geringem Abstand schrittweise gleitend entlangbewegbar ist.

3. Vorrichtung nach Anspruch 1 oder 2, dadurch **gekennzeichnet,** daß die Spiegelanordnung (30) eine an den Leseschlitz (35) unmittelbar anschließende, ihn umgebende Spiegelwanne (S) mit zur Einfallsrichtung (22) des Laserstrahls (20) offenen Wandungen (W) bildet.

4. Vorrichtung nach Anspruch 3, dadurch **gekennzeichnet,** daß die Wandungen (W) der Spiegelwanne (S) aus kontinuierlichen Spiegelflächen (31, 32, 33, 34) gebildet sind, in deren Brennlinie sich die zu lesende Zeile (11) befindet.

5. Vorrichtung nach einem der Ansprüche 1 bis 4, dadurch **gekennzeichnet,** daß der Umlenkspiegel (36) aus zwei z.B. zylinderförmig gekrümmten Schalen oder Schirmen (36a, 36b) besteht, zwischen denen ein Durchlaßspalt (D) für den Laserstrahl (20) verläuft.

6. Vorrichtung nach einem der Ansprüche 1 bis 5, dadurch **gekennzeichnet,** daß sich der Photomultiplier (40), der Umlenkspiegel (36) und der Leseschlitz (35) über die gesamte Breite der zu lesenden Zeile (11) erstrecken.

7. Vorrichtung nach einem der Ansprüche 1 bis 6, dadurch **gekennzeichnet,** daß ein Umlenkspiegel (25) einem Galvanometerscanner (G) zugeordnet und ein weiterer Umlenkspiegel (24) in Zeilenrichtung (Z) oberhalb der zu lesenden Zeile (11) angeordnet ist.

8. Vorrichtung nach einem der Ansprüche 1 bis 7, dadurch **gekennzeichnet,** daß der Informationsträger (10) eine plane Oberfläche aufweist, in eine Kassette (51) einlegbar und durch eine abnehmbaren Lichtschutzdeckel (52) vor Licht geschützt ist.

9. Vorrichtung nach Anspruch 8, dadurch **gekennzeichnet,** daß nach dem Auslesen der gesamten Informationen auf dem Informationsträger (10) noch verbliebene Restinformationen mit einer Löschvorrichtung (60), z.B. einer Anordnung von Halogenlampen, vollständig löschbar sind.

10. Vorrichtung nach einem der Ansprüche 1 bis 9, **gekennzeichnet** durch vollautomatische Steuerung der Bild-Auswertung mit Abnehmen des Lichtschutzdeckels (52) der Kassette, Auslesen der Informationen und Löschen der Restinformationen sowie Aufsetzen des Lichtschutzdeckels (52), so daß eine Berührung der empfindlichen Leuchtstoffplatte ausgeschlossen ist.

## Claims

1. Apparatus for the linewise scanning of stimulable phosphor sheets (10), especially storage sheets, fluorescent plates, or the like, by means of a laser beam (20) which is focusable by means of a lens assembly (23) and movable by means of deflection mirrors (24, 25, 26) over a line (11) to be read on said phosphor sheet (10), comprising a mirror assembly (30) which focuses on said line (11) to be read and has a plane curvature and which reflects light (12) emitted from said phosphor sheet (10), and also a photomultiplier (40) which senses the light reflected by said mirror assembly (30),
**characterized in** that said mirror assembly (30) forms part of a scanning body (A) including a reading slot (35) arranged at the bottom side, said scanning body (A) comprising two symmetrically opposite parabloid-shaped main mirror surfaces (31, 32) which are arranged in line direction (Z) and are defined towards the ends of said reading slot (35) by two paraboloidshaped end mirror surfaces (33, 34), and said main mirror surfaces (31, 32) being arranged such that light emitted from said line (11) to be read is guided by said main mirror surfaces in vertical direction away from said phosphor sheet (10) onto a deflection mirror (36) which is made semitransparent or given a divided shape and which is opposite to said scanning body (A) and deflects line radiation (L, 12) reflected from said mirror surfaces (31, 32, 33, 34) onto said photomultiplier (40).

2. The apparatus according to claim 1,
**characterized** in that a relative movement is possible between said scanning body (A) and said phosphor sheet (10) in a direction transverse to said line direction (Z), said scanning body (A) having a smooth, preferably plane bottom surface (B) below which said phosphor sheet (10) is slidingly movable therealong stepwise at a very small distance.

3. The apparatus according to claim 1 or 2,
**characterized in** that said mirror assembly (30) forms a mirror trough (S) which is directly adjacent to said reading slot (35) so as to surround said slot and comprises walls (W) which are open towards the direction of incidence (22) of said laser beam (20).

4. The apparatus according to claim 3,
**characterized in** that said walls (W) of said mirror trough (S) are formed by continuous mirror surfaces (31, 32, 33, 34) in the focal line of which said line (11) to be read is located.

5. The apparatus according any of claims 1 to 4,
**characterized in** that said deflection mirror (36) consists of two shells or shields (36a, 36b) which have e.g. a cylindrical curvature and between which a passage slit (D) for said laser beam (20) extends.

6. The apparatus according to any of claims 1 to 5,
**characterized in** that said photomultiplier (40), said deflection mirror (36) and said reading slit (35) extend over the entire width of said line (11) to be read.

7. The apparatus according to any of claims 1 to 6,
**characterized in** that a deflection mirror (25) has assigned thereto a galvanometer scanner (G) and another deflection mirror (24) is arranged in said line direction (Z) above said line (11) to be read.

8. The apparatus according to any of claims 1 to 7,
**characterized in** that said phosphor sheet (10) has a plane surface, is insertable into a cassette (51) and protected from light by a removable light shield cover (52).

9. The apparatus according to claim 8,
**characterized** in that residual information remaining on said phosphor sheet (10) after the entire information has been read out is completely erasable with the aid of a deletion device (60), e.g. an arrangement of halogen lamps.

10. The apparatus according to any of claims 1 to 9,
**characterized by** a fully automatic picture-evaluation control including the steps of removing said light shield cover (52) of said cassette, reading out said information and erasing the residual information and mounting said light shield cover (52), thereby excluding any contact with said sensitive fluorescent plate.

## Revendications

1. Dispositif pour le balayage linéaire de supports d'informations stimulables (10), notamment de feuilles à mémoire, d'écrans luminescents ou autres, à l'aide d'un rayon laser (20) qui peut être focalisé moyennant un agencement de lentilles (23) et déplacé sur une ligne devant être lue (11) sur le support d'information (10) au moyen de miroirs de déviation (24, 25, 26), avec un agencement de miroirs recourbés en plan (30), focalisé sur la ligne devant être lue (11), et qui reflète la lumière (12) émise par le support d'informations (10), et avec un photomultiplicateur (40) saisissant la lumière réfléchie par l'agencement de miroirs (30), **caractérisé** par le fait que l'agencement de miroirs (30) est un élément d'un corps de balayage (A) ayant une fente de lecture (35) disposée sur le fonds, et qu'en même temps le corps de balayage (A) a deux surfaces réfléchissantes principales (31, 32) de forme paraboloïde, opposées et symétriques entre elles, disposées en direction (Z) de la ligne, qui se termiment aux extrémités de la fente de lecture (35) par deux surfaces réfléchissantes terminales (33, 34) de forme parabolïdes, les surfaces réfléchissantes principales (31, 32) étant disposées de telle manière que la lumière émise par la ligne devant être lue (11) est dirigée par elles en direction verticale depuis le support d'informations (10) vers un miroir de déviation (36) qui est conçu comme miroir semi-transparent ou partagé, qui fait face au corps de balayage (A), et qui dévie sur le photomultiplicateur (40) les radiations de la ligne (L, 12) réfléchies par les surfaces (31, 32, 33, 34) des miroirs.

2. Dispositif selon la revendication 1, **caractérisé** par le fait qu'un mouvement relatif, de direction transversale par rapport à la direction (Z) de la ligne, peut être effectué entre le corps de balayage (A) et le support d'informations (10), le corps de balayage (A) ayant un fond (B) lisse, de préférence plan, sous lequel, à une très faible distance, le support d'informations (10) peut être déplacé en glissant par étapes.

3. Dispositif selon la revendication 1 ou 2, **caractérisé** par le fait que l'agencement de miroirs (30) forme une cuvette réfléchissante (S) qui vient directement après la fente de lecture (35) qu'elle entoure, avec des parois (W) ouvertes en direction de l'incidence (22) du rayon laser (20).

4. Dispositif selon la revendication 3, **caractérisé** par le fait que les parois (W) de la cuvette réfléchissante (S) sont formées de surfaces réféchissantes continues (31, 32, 33, 34), dans la ligne focale desquelles se trouve la ligne devant être lue (11).

5. Dispositif selon une des revendications 1 à 4, **caractérisé** par le fait que le miroir de déviation (36) est formé par exemple de deux coupes ou bols (36a, 36b) recourbés de forme cylindrique, entre lesquels passe une fente de passage (D) pour le rayon laser (20).

6. Dispositif selon une des revendications 1 à 5, **caractérisé** par le fait que le photomultiplicateur (40), le miroir de déviation (36) et la fente de lecture (35) s'étendent sur toute la largeur de la ligne devant être lue (11).

7. Dispositif selon une des revendications 1 à 6, **caractérisé** par le fait qu'un miroir de déviation (25) est associé à un scanner galvanométrique (G), et qu'un autre miroir de déviation (24) est disposé, en direction (Z) de la ligne, au-dessus de la ligne devant être lue (11).

8. Dispositif selon une des revendications 1 à 7, **caractérisé** par le fait que le support d'informations (10) a une surface plane, qu'il peut être placé dans une cassette (51) et qu'il est protégé de la lumière par un couvercle de protection (52) amovible.

9. Dispositif selon la revendication 8, **caractérisé** par le fait qu'après lecture de toutes les informations sur le support d'informations (10), les informations subsistantes peuvent être entièrement effacées à l'aide d'un dispositif d'effacement (60), par exemple un agencement de lampes à halogène.

10. Dispositif selon une des revendications 1 à 9, **caractérisé** par une commande entièrement automatique de la reproduction d'images, avec dépose du couvercle de protection (52) de la cassette, lecture des informations, effacement des informations subsistantes et repose du couvercle de protection contre la lumière (52), si bien qu'un contact avec le sensible écran luminescent est exclu.
